# EUROPÄISCHE PATENTSCHRIFT

(11) **EP 1 925 921 B1**
(45) Veröffentlichungstag und Bekanntmachung des Hinweises auf die Patenterteilung: **11.11.2015**
(21) Anmeldenummer: 07121329.2
(22) Anmeldetag: 22.11.2007
(51) Int. Cl.: G01G 9/00, G01G 11/00, A22C 17/00, G01B 11/24, G01F 1/86

(54) **Verfahren und Vorrichtung zur Bestimmung der Masse von Stückgut auf einer Fördereinrichtung**
Method and device for determining the mass of piece goods in a conveyor facility
Procédé et dispositif destinés à la détermination de la masse de marchandises au détail sur un dispositif de convoyage

(30) Priorität: 22.11.2006 DE 102006055431
(43) Veröffentlichungstag der Anmeldung: 28.05.2008
(73) Patentinhaber: Dr. AUGUST OETKER NAHRUNGSMITTEL KG, 33617 Bielefeld (DE)
(72) Erfinder: Rohe, Thomas, 49632, Essen i.O. (DE); große Kohorst, Werner, 49413, Dinklage (DE); Dr. Spiegel, Udo, 33619, Bielefeld (DE); Schäfer, Thomas, 33659, Bielefeld (DE); Pisch, Torsten, 33719, Bielefeld (DE)
(74) Vertreter: Taruttis, Stefan Georg

(56) Entgegenhaltungen:
- EP-A1- 0 736 339
- WO-A1-89/06782
- WO-A1-90/02318
- WO-A1-2004/106020
- DE-A1-102005 010 183
- GB-A- 2 421 676
- US-A- 5 142 160
- US-A- 5 585 603
- US-A1- 2005 241 862
- US-A1- 2006 157 388

## Beschreibung

Die Erfindung betrifft ein Verfahren zur Bestimmung der Masse eines auf einer Fördereinrichtung befindlichen schütt- oder rieselfähigen Stückguts, das die Schritte umfaßt:
a) Verteilen einzelner Stücke des Stückguts auf der Fördereinrichtung derart, daß sich mindestens die Hälfte derselben nicht gegenseitig überlappen; b) Fördern des Stückguts auf der Fördereinrichtung entlang einer Förderrichtung durch einen Erfassungsbereich mindestens einer Kamera; c) Erzeugen von aneinander anschließenden oder teilweise überlappenden Bildern der Stücke in dem Erfassungsbereich mit Hilfe der Kamera; d) Erzeugen von geometrischen Daten der Stücke auf der Grundlage der Bilder in Abhängigkeit von der Position der Stücke auf der Fördereinrichtung; e) Berechnen der Masse der auf der Fördereinrichtung angeordneten Stücke aufgrund der geometrischen Daten derselben in Abhängigkeit von der Position der Stücke auf der Fördereinrichtung.

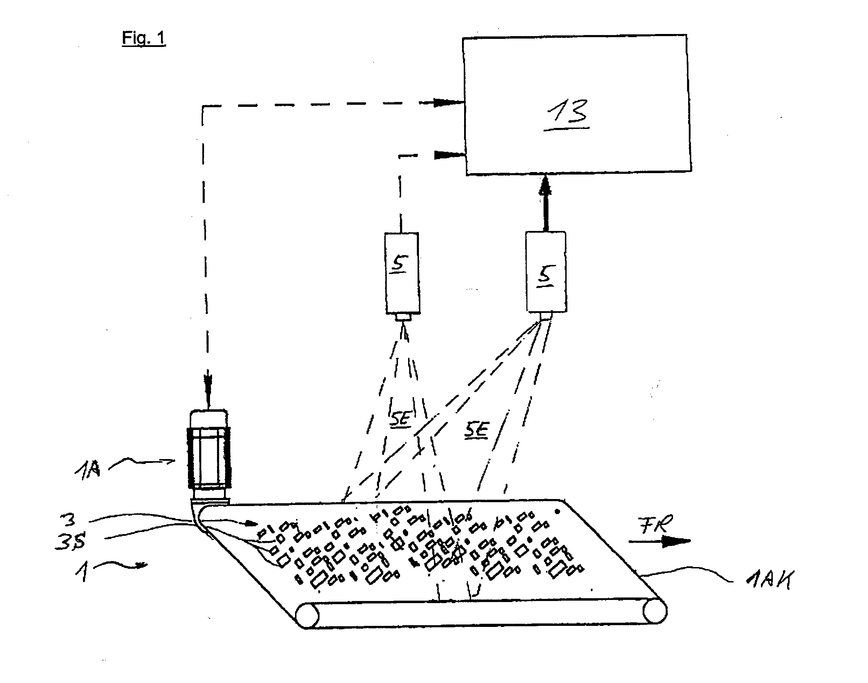

Mit Bezug auf Fig. 1 wird folgend eine nicht erfindungsgemäße Vorrichtung zur Durchführung eines Verfahrens zur Bestimmung der Masse von einem auf einer Fördereinrichtung verteilten schütt- oder rieselfähigen Gut beschrieben.

Die Vorrichtung umfaßt eine Fördereinrichtung 1 in Form eines Förderbandes, auf dem das Stückgut 3 verteilt ist. Die einzelnen Stücke 3S des Stückgutes 3 sind dabei derart auf dem Förderband 1 verteilt, daß sich ein überwiegender Teil der Stücke 3S des Stückguts 3 nicht gegenseitig überlappt. Das Förderband 1 fördert das Stückgut entlang einer Förderrichtung FR mit einer konstanten Geschwindigkeit.

Das Förderband 1 ist von einem Förderantrieb 1A angetrieben, der von einer Datenverarbeitungsanlage 13 gesteuert ist.

Oberhalb des Förderbandes 1 sind zwei Kameras 5 angeordnet, die jeweils einen Erfassungsbereich 5E aufweisen, wobei sich die Erfassungsbereiche 5E der Kameras 5 auf dem Förderband 1 überlappen.

Jedes Stück 3S des Stückguts 3 wird somit aus zwei Richtungen fotografiert, und die Bilder der Stücke 3S werden in der Datenverarbeitungsanlage 13 zusammengeführt. Die Datenverarbeitungsanlage 13 interpoliert aus den Bilddaten der Kameras 5 ein Volumen der Stücke 3S des Stückguts 3, indem beispielsweise die Stücke 3S des Stückguts 3 durch Ellipsoide approximiert werden.

Die auf diese Weise generierten Volumeninformationen über die Stücke 3S werden mit der Dichte des Stückguts 3 multipliziert, wodurch sich die Masse der einzelnen Stücke 3 S ergibt.

Da der Datenverarbeitungsanlage 13 durch an dem Förderband 1 angeordnete Impulsgeber der tatsächliche Vorschub des Förderbandes 1 mitgeteilt wird, liegen in der Datenverarbeitungsanlage 13 Daten vor, die angeben, welche Masse des Guts in welchem Abstand von einer Abwurfkante 1AK des Förderbands 1 angeordnet ist.

Ein Nachteil des Verfahrens und der Vorrichtung gemäß der Fig. 1 ist, daß lediglich die Masse der Stücke als Funktion des Abstands von der Abwurfkante 1AK bestimmbar ist.

Die WO 89/06782 beschreibt ein Verfahren zum Sortieren von Gegenständen durch optisches Abtasten der Gegenstände auf einem Förderband, die unter einem schmalen Lichtstrahl durchgeführt werden, wobei reflektiertes Licht in wenigstens zwei verschiedenen Richtungen aufgenommen wird, um die Kontur des Objekts aus wenigstens diesen zwei Richtungen festzustellen. Das Gewicht des Objekts wird durch Multiplikation mit einem durchschnittlichen Dichtefaktor bestimmt.

Die US 2006/0157388 A1 beschreibt die optische Abtastung von Produktstücken und der Zuordnung zu Schneid- oder Portioniermaschinen nach vorgegebenen Kriterien eines aufgenommenen Abbilds der Stücke. Als Kriterien können die erwarteten Ausbeuten aus einem Stück, dessen Wert oder Verluste vorgesehen werden.

Die US 5,142,160 beschreibt eine optische Abtasteinrichtung for Fische, mit der das Volumen des Fisches mit Hilfe der spezifischen Masse berechnet werden kann.

Die US 2005/0241862 A1 beschreibt die Bestrahlung von Objekten zur Erzeugung von hellen Projektionen von deren Form und die Aufnahme dieser Proiektionen mittels einer Kamera, mit anschließender Umrechnun dg er Proiektionen in ein Gewicht.

Die US 5,585,603 beschreibt die Massebestimmung von Stücken mit einer Röntgeneinrichtung, wobei von einem Computer die Position und Masse jedes Volumellelemellts gespeichert werden können. Auf Basis dieser Daten kann ein vollständiges Profil des durchleuchteten Produkts auf dem Förderband erzeugt werden.

Aufgabe der vorliegenden Erfindung ist es daher, ein Verfahren und eine Vorrichtung anzugeben, das bzw. die eine größere Variabilität und Flexibilität bei der Analyse von auf der Fördereinrichtung angeordneten Stücken des Stückguts ermöglicht.

Diese Aufgabe wird erfindungsgemäß durch ein Verfahren nach Anspruch 1 gelöst.

Die erfindungsgemäße Vorrichtung und das damit durchführbare Verfahren weisen optional genau eine Kamera auf, die zur zeilenmäßigen Erfassung von Stückqualitäten des Stückguts eingerichtet ist und die vorzugsweise oberhalb der Fördereinrichtung angeordnet ist.

Erfindungsgemäß wird als eine Stückqualität die Masse der Stücke des Stückguts bestimmt, besonders bevorzugt in Kombination mit zumindest einer weiteren Stückqualität, z.B. ausgewählt aus der Anzahl, Farbe und Mindestabmessung von Stücken des Stückguts.

Bei dem erfindungsgemäßen Verfahren wird die Vorschubgeschwindigkeit der Fördereinrichtung zur Abförderung vorbestimmter Werte mindestens einer Stückqualität in Abhängigkeit von einer den Stücken des Stückguts zugeordneten Stückqualität gesteuert, insbesondere zur Abförderung einer vorbestimmten Masse des Stückguts. Bevorzugt wird der Vorschub bzw. die Vorschubgeschwindigkeit der Fördereinrichtung zur Abförderung von Stückgut mit mindestens zwei vorbestimmten Werten zweier Stückqualitäten in Abhängigkeit von den durch eine Kamera erfassten und zugeordneten Stückqualitäten gesteuert, z.B. von Masse und Anzahl der Stücke des Stückguts, um eine vorbestimmte Mindestgesamtmasse und eine Mindestanzahl von Stücken des Stückguts abzufördern. Entsprechend der Ausgestaltung des Verfahrens, eine Kombination zweier oder mehrerer voneinander unabhängiger Stückqualitäten zu bestimmen und nach vorbestimmten Werten durch Steuerung der Fördereinrichtung abzufördern, ist die erfindungsgemäße Vorrichtung vorzugsweise eingerichtet, den Vorschub bzw. die Vorschubgeschwindigkeit der Fördereinrichtung in Abhängigkeit von einer, vorzugsweise mindestens zweier von der Kamera erfassten und den Stücken des Stückguts zugeordneten Stückqualitäten zu steuern. Bevorzugt ist die Kamera eine Zeilenkamera.

Dazu wird für das Stückgut vorab eine durchschnittliche Flächenmasse bestimmt sowie als ein Teil der geometrischen Daten im Schritt e) ein Projektionsflächenmaß einer Projektionsfläche eines jeden Stückes des Stückguts in einer festgelegten Projektionsrichtung bestimmt und im Schritt e) das Projektionsflächenmaß der Stücke (3S) mit der durchschnittlichen Flächenmasse multipliziert.

Zur Bestimmung der durchschnittlichen Flächenmasse des Stückguts wird bevorzugt eine vorbestimmte Masse des Stückguts auf der Fördereinrichtung verteilt und durch den Erfassungsbereich der Kamera geleitet, und die Projektionsflächenmaße von Stücken dieses Stückguts werden zu einem Gesamtprojektionsflächenmaß addiert, so daß sich die durchschnittliche Flächenmasse als Quotient der vorbestimmten Masse und des Gesamtprojektionsflächenmaßes des Stückguts ergibt.

Bevorzugt wird als ein Teil der geometrischen Daten im Schritt e) ein Projektionsflächenschwerpunkt von der Projektionsfläche eines jeden Stückes des Stückguts bestimmt.

Bevorzugt wird das Stückgut auf die Fördereinrichtung in einem kontinuierlichen Materialstrom aufgestreut, und eine Fördergeschwindigkeit der Fördereinrichtung wird derart eingestellt, daß sich die einzelnen Stücke des Stückguts nicht überlappen. Die Fördereinrichtung ist vorzugsweise in dem Abschnitt, in dem sie im Erfassungsbereich der Kamera angeordnet ist, mit geschlossener Oberfläche bzw. unterbrechungsfrei, wobei die Kamera oberhalb der Fördereinrichtung angeordnet ist, optional auch die Beleuchtung oberhalb angeordnet und auf den Erfassungsbereich gerichtet ist.

Vorteilhaft wird das Stückgut im Schritt c) mit einer kontinuierlichen Geschwindigkeit durch den Erfassungsbereich der mindestens einen Kamera geführt.

Vorteilhaft werden von der Kamera Zeilenbilder erzeugt, die eine Breite der Fördereinrichtung abdecken.

Im Schritt e) können die Bilder des Stückguts auf der Fördereinrichtung in einer Datenverarbeitungsanlage anhand von gegenseitigen Überlappungsbereichen aneinander gefügt werden.

Bevorzugt wird das Auslösen der Kamera von einem Signal getriggert, das den Vorschub der Fördereinrichtung wiedergibt.

Bevorzugt werden fehlerhafte Stücke des Stückguts mit Hilfe einer Aussortiereinrichtung aussortiert, die in Förderrichtung vor oder nach der mindestens einen Kamera angeordnet ist.

Stücke des Stückguts mit einem Projektionsflächenmaß, das kleiner als eine vorgegebene Mindestgröße ist, werden bevorzugt im Schritt e) nicht berücksichtigt.

Stücke des Stückguts können im Schritt d) von oberhalb und/oder unterhalb der Fördereinrichtung angeordneten Lichtquellen beleuchtet werden.

Von der mindestens einen Kamera werden im Schritt d) bevorzugt Bilder von den auf der Fördereinrichtung angeordneten Stücken erzeugt, die die senkrechte Projektionsfläche des Stückguts auf die Fördereinrichtung zeigen.

Für jedes Stück des Stückguts wird bevorzugt mindestens eine weitere Stückqualität, bspw. die Form, der Umfang oder die Farbe, bestimmt.

Diese Aufgabe wird erfindungsgemäß vorrichtungsseitig gelöst durch eine Vorrichtung zur Bestimmung der Masse eines schütt- oder rieselfähigen Stückguts mit einer Fördereinrichtung, auf der das Stückgut verteilt angeordnet ist, mindestens einer Kamera, die auf die Fördereinrichtung gerichtet ist und Bilder des auf der Fördereinrichtung angeordneten Stückguts erzeugt, sowie einer Datenverarbeitungsanlage, die die von der Kamera erzeugten Bilder erhält und auswertet, um die Masse des Stückguts zu bestimmen, wobei die Vorrichtung eingerichtet ist, jedes Stück des Stückguts durch ein Verfahren gemäß einem der Ansprüche 1 bis 15 zu indizieren und ihm mindestens eine Stückqualität und seine Position auf der Fördereinrichtung zuzuordnen.

Diese Aufgabe wird erfindungsgemäß ferner vorrichtungsseitig gelöst durch eine Vorrichtung zur dosierten Abgabe eines schütt- oder rieselfähigen Stückguts, mit einer Fördereinrichtung, auf der das Stückgut verteilt angeordnet ist, mindestens einer Kamera, die auf die Fördereinrichtung gerichtet ist und Bilder des auf der Fördereinrichtung angeordneten Stückguts erzeugt, sowie einer Datenverarbeitungsanlage, die die von der Kamera erzeugten Bilder erhält und auswertet, um geeignet Stückgut von der Fördereinrichtung abzufördern, wobei die Vorrichtung eingerichtet ist, jedes Stück des Stückguts durch ein Verfahren gemäß einem der Ansprüche 1 bis 15 zu indizieren und ihm mindestens eine Stückqualität und seine Position auf der Fördereinrichtung zuzuordnen sowie die Stücke entsprechend der mindestens einen Stückqualität und/oder entsprechend einer vorbestimmten (Mindest-)Stückzahl von der Fördereinrichtung abzugeben.

Vorteilhaft ist die Fördereinrichtung ein Förderband oder eine Rüttelrinne.

Bevorzugt ist das Förderband oder die Rüttelrinne durch ein transparentes Material gebildet, und eine Lichtquelle darunter angeordnet, um die Stücke des Stückguts von unten zu beleuchten.

Bevorzugt ist eine optische Achse der mindestens einen Kamera senkrecht zur Förderrichtung angeordnet.

Vorteilhaft umfaßt die Fördereinrichtung einen Abstreifer, der in Förderrichtung nach einer Abwurfkante der Fördereinrichtung angeordnet ist.

Die Lichtquelle kann eine IR-, UV- oder farbige Lichtquelle sein.

Diese Aufgabe wird erfindungsgemäß ferner gelöst durch ein Softwareprodukt mit Programmcodeinformationen zur Ausführung des Verfahrens, wobei das Softwareprodukt bevorzugt auf einem Speichermedium gespeichert ist.

Die Erfindung wird nachfolgend anhand eines Ausführungsbeispiels unter Bezugnahme auf eine Zeichnung erläutert. Es zeigen:
Fig. 1 eine schematische Darstellung einer nicht erfindungsgemäßen Vorrichtung zur Bestimmung der Masse von einem auf einer Fördereinrichtung verteilten schütt- oder rieselfähigen Stückgut;
Fig. 2 eine schematische Darstellung der erfindungsgemäßen Vorrichtung zur Bestimmung der Masse von einem auf einer Fördereinrichtung verteilten schütt- oder rieselfähigen Stückgut;
Fig. 3 eine Draufsicht auf die Fördereinrichtung der Fig. 2; und
Fig. 4 eine schematische Darstellung von verschiedenen Stadien der Erfassung eines Stückes des Stückguts mit Hilfe der Vorrichtung der Fig. 2.

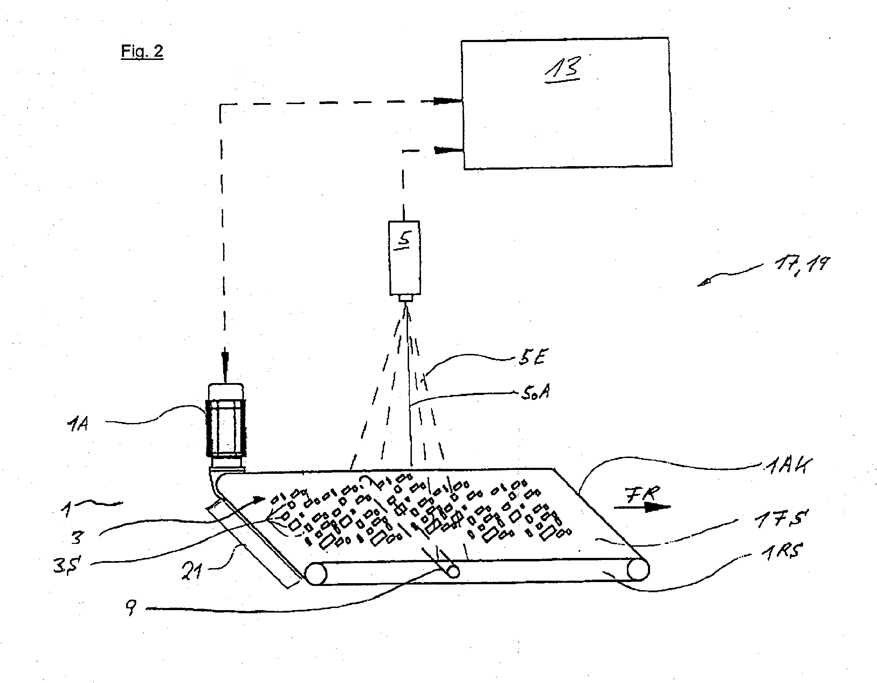

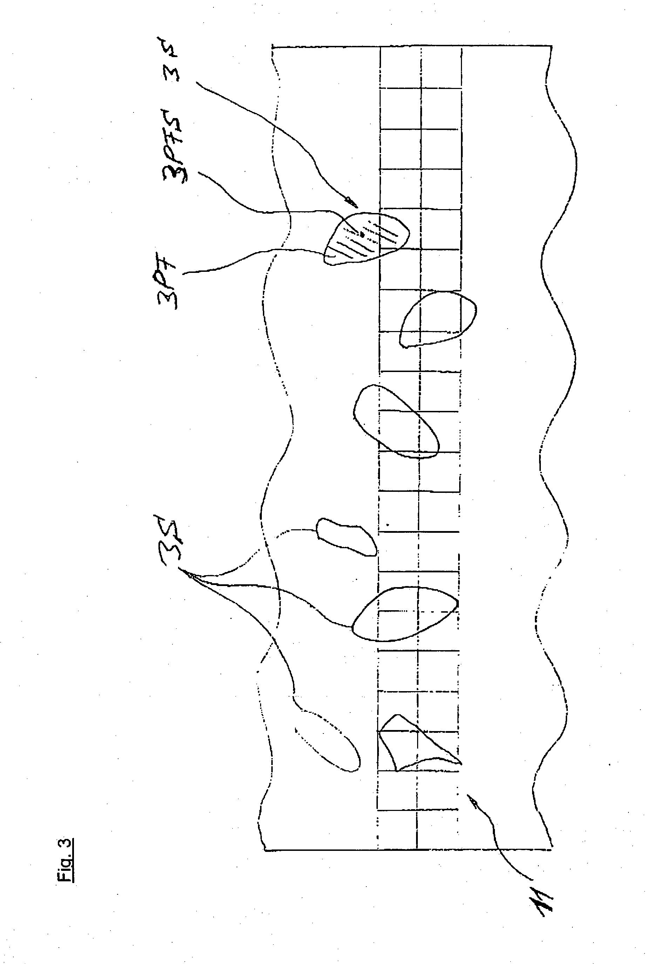

Unter Bezug auf die Fig. 2 und 3 wird folgend ein Verfahren zur Bestimmung der Masse von einem auf einer Fördereinrichtung 1 verteilten schütt- oder rieselfähigen Stückgut 3 beschrieben.

Eine Fördereinrichtung 1 in Fig. 2 in Form eines Förderbandes ist von einem Förderantrieb 1A angetrieben, der von einer Datenverarbeitungsanlage 13 gesteuert ist.

Die Datenverarbeitungsanlage 13 übermittelt eine gewünschte Soll-Geschwindigkeit an den Förderantrieb 1A, und erhält von dem Förderband 1 zugeordneten Impulsgebern den tatsächlichen Vorschub des Förderbandes 1. Die Datenverarbeitungsanlage 13 kann den Förderantrieb 1A daher so regeln, daß das Förderband 1 eine gewünschte Fördergeschwindigkeit aufweist.

Auf dem Förderband 1 sind Stücke 3S des Stückguts 3 verteilt, wobei die Stücke 3S des Stückguts 3 derart auf dem Förderband 1 verteilt sind, daß sich ein überwiegender Teil derselben nicht gegenseitig überlappt.

Die Stücke 3S des Stückguts 3 werden auf dem Förderband 1 entlang einer Förderrichtung FR gefördert, und an einer Abwurfkante 1AK des Förderbandes 1 von dem Förderband 1 abgegeben.

Dem Förderband 1 ist gegenüber der Abwurfkante 1AK ein Abstreifer 21 zugeordnet, der beim Rücklauf des Förderbandes 1 an dem Förderband 1 anhaftendes Stückgut 3 abstreift.

Das Förderband 1 ist zumindest teilweise für die von der Lichtquelle 9 erzeugte Strahlung transparent, beispielsweise aus einem durchsichtigen oder weißen Kunststoffmaterial gebildet, und zwischen einer Förderseite 1FS und einer Rücklaufseite 1RS des Förderbandes 1 ist eine Lichtquelle 9 angeordnet, so daß Lichtstrahlen von der Lichtquelle 9 durch die Förderseite 1FS des Förderbandes 1 verlaufen.

Die Lichtquelle 9 kann aus einer oder mehreren Lampen bestehen, wobei die Lichtquelle 9 bevorzugt entlang ihrer Längsachse eine konstante Beleuchtungsstärke aufweist. Der Lichtquelle 9 sind bevorzugt Reflektoren derart zugeordnet, daß Lichtstrahlen von der Lichtquelle 9 zum überwiegenden Teil senkrecht zur Ebene der Förderseite 1FS des Förderbandes 1 verlaufen.

Durch die beschriebene Anordnung der Lichtquelle 9 und des transparenten Förderbandes 1 werden die Stücke 3S des Stückguts 3 von unten beleuchtet.

Eine Beleuchtung der Stücke 3S des Stückguts 3 kann alternativ dadurch erreicht werden, daß eine oder mehrere Lampen oberhalb der Förderseite 1FS des Förderbandes 1 angeordnet sind.

Oberhalb des Förderbandes 1 ist eine Kamera 5 angeordnet, deren optische Achse 5oA senkrecht zu der Ebene der Förderseite 1FS des Förderbandes 1 verläuft. Ein Erfassungsbereich 5E der Kamera 5 ist so eingestellt, daß er den von der Lichtquelle 9 durchleuchteten Bereich der Förderseite 1FS des Förderbandes 1 abdeckt.

Die Kamera 5 erstellt Zeilenbilder 11, wie in Fig. 3 dargestellt, von den Stücken 3S auf dem Förderband 1.

Dadurch, daß die Kamera 5 oberhalb der Förderseite 1FS des Förderbandes 1 angeordnet ist und die Stücke 3 S des Stückguts 3 von unten beleuchtet werden, erstellt die Kamera 5 Bilder von den Stücken 3S des Stückguts 3, die eine Projektionsfläche 3PF eines jeden Stückes 3S auf die Förderseite 1FS des Förderbandes 1 zeigen. Dadurch, daß die Stücke 3S des Stückguts 3 von unten beleuchtet werden, zeigen die von der Kamera 5 erstellten Bilder die senkrechte Projektionsfläche der Stücke 3S auf die Förderseite 1FS.

Das Auslösen der Kamera 5 wird von der Datenverarbeitungsanlage 13 gesteuert. Die Datenverarbeitungsanlage erhält, wie oben beschrieben, von nicht dargestellten Impulsgebern den tatsächlichen Vorschub des Förderbandes 1, und verwendet diese Daten, um das Auslösen des Kamera 5 so zu triggern, daß aufeinanderfolgende Bilder ohne Überlappungsbereich aneinander gefügt werden können, um einen "Endlosfilm" der auf dem Förderband 1 angeordneten Stücke 3 S zu erhalten.

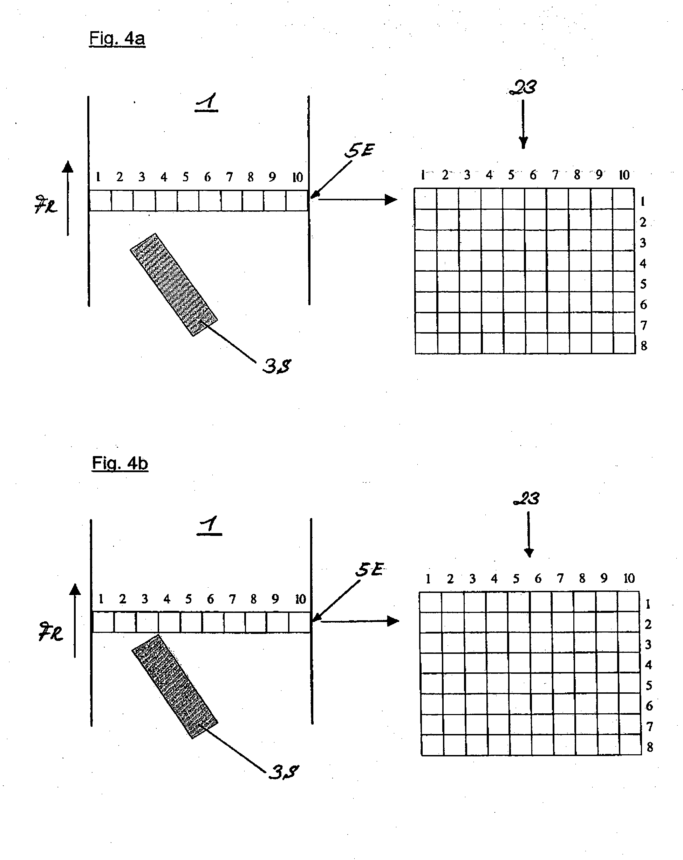

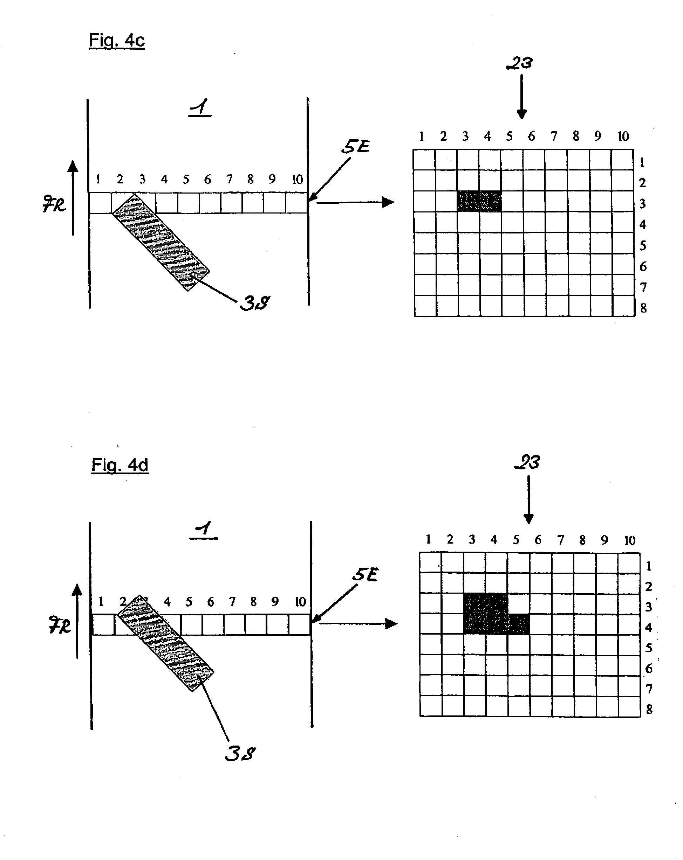

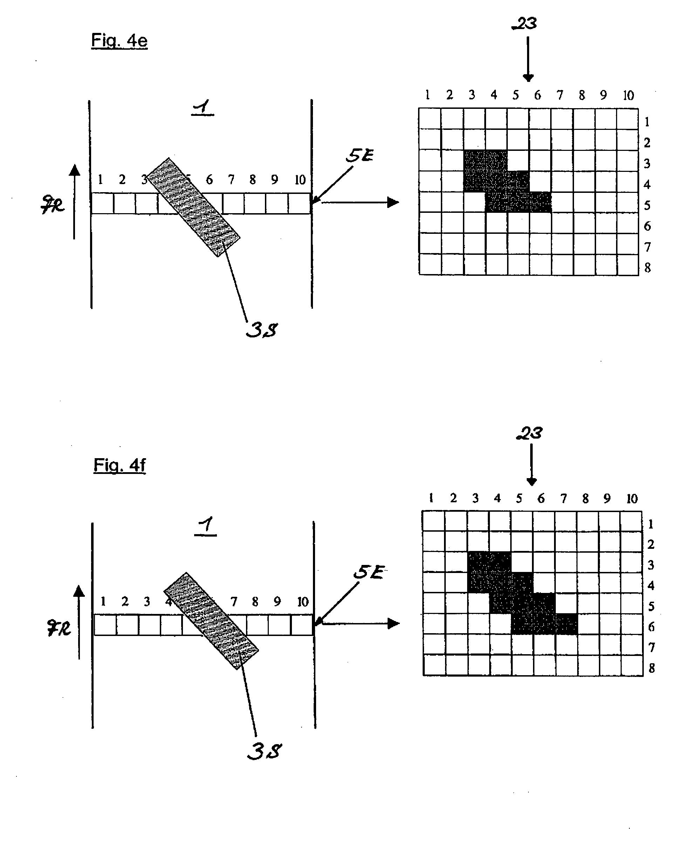

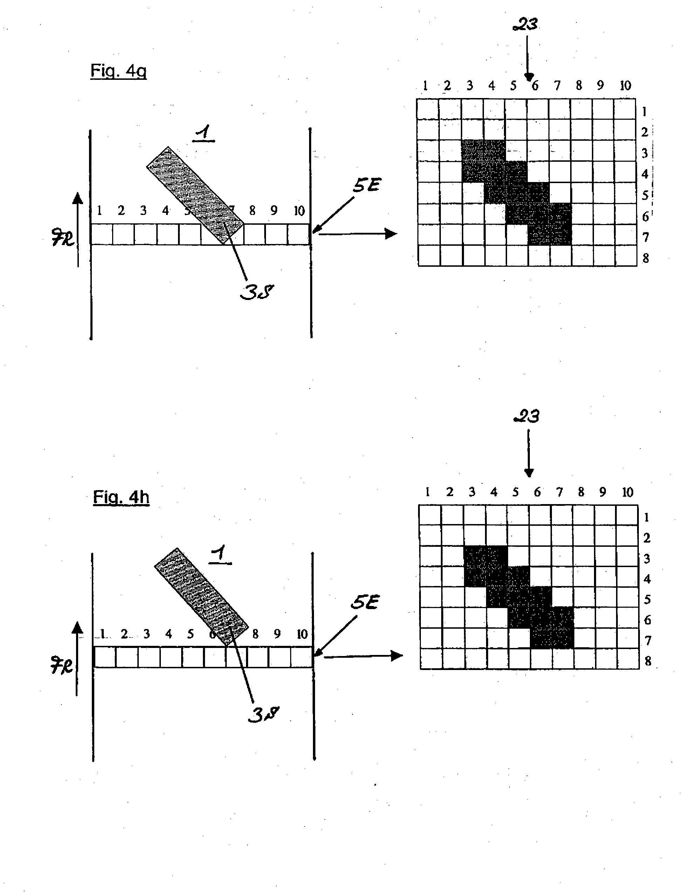

In der Datenverarbeitungsanlage 13 werden die aufeinanderfolgenden Bilder der Kamera 5 aneinander gefügt, wie nachfolgend unter Bezug auf Fig. 4 beschrieben:
Fig. 4 zeigt in verschiedenen Stadien schematisch das Erfassen eines Stückes 3S mit der Kamera 5 und der angeschlossenen Datenverarbeitungsanlage 13, wobei das Stück 3S auf der Fördereinrichtung 1 in Förderrichtung FR durch den Erfassungsbereich 5E der Kamera 5 (Zeilenbild 11) gefördert wird.
Fig. 4a zeigt das Stück 3S auf der Fördereinrichtung 1 in einem gewissen Abstand in Förderrichtung FR von dem Erfassungsbereich 5E der Kamera 5. Da die Kamera 5 eine Zeilenkamera ist, ist der Erfassungsbereich 5E zeilenförmig, vorliegend der Einfachheit halber in zehn Zellen unterteilt.

In dem Moment, in dem die Kamera 5 auslöst, werden von der Kamera 5 Graustufenwerte für jede der zehn Zellen des Erfassungsbereichs 5E erfaßt. Ist der Graustufenwert einer Zelle größer als ein vorbestimmter Schwellenwert (bspw. größer als 100 bei einer 8Bit S/W-Kamera mit 255 Graustufenwerten), so wird dies so gewertet, als ob sich kein Objekt in der zugehörigen Zelle des Erfassungsbereichs 5E auf der Fördereinrichtung 1 befindet und dieser Zelle wird eine Null ("weiße Zelle") zugeordnet. Ist der Graustufenwert einer Zelle kleiner als der vorbestimmte Schwellenwert, so wird dies so gewertet, als ob sich ein Objekt in der zugehörigen Zelle des Erfassungsbereichs 5E auf der Fördereinrichtung 1 befindet und dieser Zelle wird eine Eins ("schwarze Zelle") zugeordnet. Der Schwellenwert ist typischerweise frei einstellbar und kann für jede Anwendung individuell festgelegt werden.

Die Nullen und Einsen einer jeden Zelle des Erfassungsbereichs 5E werden dann in eine Zeile eines Ringspeichers 23 geschrieben. In Fig. 4a ist die erste Zeile des Ringspeichers 23 mit den Nullen und Einsen der Zellen des Erfassungsbereichs 5E beschrieben. Da in Fig.4a in dem Erfassungsbereich 5E der Kamera 5 kein Objekt vorhanden ist, besteht die erste Zeile des Ringspeichers 23 aus weißen Zellen ("Nullen").

Fig. 4b zeigt das Stück 3S näher an dem Erfassungsbereich 5E der Kamera. Das Auslösen der Kamera 5 ist durch die Datenverarbeitungsanlage 13 so gesteuert, daß die Aufnahme der Fig. 4b vorgenommen wird, wenn die Förderseite 1FS der Fördereinrichtung 1 in Förderrichtung FR so weit verfahren ist, wie der Erfassungsbereich 5E in Förderrichtung FR lang ist (wie in Fig. 4a und 4b dargestellt). Da sich wiederum kein Objekt in dem Erfassungsbereich 5E der Kamera 5 befindet, finden sich in der zweiten Zeile des Ringspeichers 23 ebenfalls nur weiße Zellen.

Fig. 4c zeigt das Stück 3S mit einem dreieckförmigen Ende in dem Erfassungsbereich 5E der Kamera 5. Die Kamera 5 erfaßt in diesem Fall geringe Graustufenwerte in den Zellen 3 und 4 (durch das dreieckförmige Ende des Stückes 3S ist die Lichtquelle 9 verschattet) und in den übrigen Zellen hohe Graustufenwerte (da sich in den zugehörigen Bereichen des Erfassungsbereichs 5E keine Stücke 3S befinden).

Dementsprechend sind in der dritten Zeile des Ringspeichers 23 die Zellen 3 und 4 geschwärzt und die übrigen Zellen weiß.

An dieser Stelle registriert die Datenverarbeitungsanlage 13 somit ein Objekt (das Stück 3S) auf der Fördereinrichtung 1. Die Datenverarbeitungsanlage 13 überprüft dann für jede geschwärzte Zelle, ob die benachbarten Zellen derselben Zeile ebenfalls geschwärzt sind:
Für die Zelle (3,3), d.h. Spalte 3, Zeile 3, des Ringspeichers 23 ergibt sich, daß die Zelle (2,3) weiß ist und die Zelle (4,3) schwarz ist. Da die Zelle (4,3) eine benachbarte Zelle ist, wird angenommen, daß die Zellen (3,3) und (4,3) von demselben Objekt geschwärzt sind und somit zu demselben Objekt gehören. Dasselbe wird für die Zelle (4,3) durchgeführt, wobei festgestellt wird, daß die Zelle (5,3) weiß ist, wodurch festgestellt wird, daß nur die Zellen (3,3) und (4,3) zu demselben Objekt gehören. Diesem Objekt wird die Stücknummer 1 zugeordnet.

Weitere Zellen sind in Zeile 3 des Ringspeichers 23 nicht geschwärzt, so daß keine weiteren Stücknummern zu vergeben sind. Wäre in Zeile 3 des Ringspeichers 23 eine weitere Zelle geschwärzt, die nicht benachbart zu den Zellen 3 oder 4 ist, bspw. die Zelle 8, so würden für diese Zelle die benachbarten Zellen untersucht (in diesem Beispiel die Zellen (7,3) und (9,3) und festgestellt, daß diese weiß sind. Die Datenverarbeitungsanlage 13 würde dann an diese Zelle 8 eine weitere Stücknummer vergeben, in diesem Beispiel die Stücknummer 2.

In Fig. 4d sind die Zellen 3, 4 und 5 in dem Erfassungsbereich 5E durch das Stück 3S verdunkelt, was in dem Ringspeicher 23 zu geschwärzten Zellen 3, 4 und 5 in Zeile 4 des Ringspeichers 23 führt.

Die Datenverarbeitungsanlage 13 überprüft bei jeder geschwärzten Zelle der zuvor aufgenommen Zeile (Zeile 3) die benachbarten Zellen in der gerade aufgenommen Zeile (Zeile 4) und stellt fest, daß jede geschwärzte Zelle in der vierten Zeile des Ringspeichers 23 eine benachbarte geschwärzte Zelle in der dritten Zeile des Ringspeichers 23 aufweist. Die neu hinzu gekommenen geschwärzten Zellen der vierten Zeile des Ringspeichers 23 werden daher demselben Objekt zugeordnet, nämlich dem Stück 3S mit der Stücknummer 1.

Wäre eine Zelle der vierten Zeile des Ringspeichers 23 geschwärzt gewesen, deren benachbarte Zellen weiße Zellen sind (bspw. die Zelle 9), so hätte die Datenverarbeitungsanlage 13 ein neues Objekt angenommen und hätte an diese Zelle 9 eine neue Stücknummer vergeben.

In den Fig. 4e und 4f wiederholt sich der gleiche Vorgang wie bei Fig. 4d, bis auf die Tatsache, daß die Spalten- bzw. Zeilennummern jeweils um eins erhöht sind.

In Fig. 4g sind die Zellen 6 und 7 von einem Ende des Stücks 3S verschattet, so daß die Zellen 6 und 7 der siebten Zeile des Ringspeichers 23 geschwärzt sind. Wiederum werden die benachbarten Zellen der geschwärzten Zellen der zuvor aufgenommen Zeile (Zeile 6) untersucht und es wird festgestellt, daß sich in der nun aufgenommen Zeile (der siebten Zeile des Ringspeichers 23) jeweils zu diesen benachbarte geschwärzte Zellen finden, so daß die geschwärzten Zellen der siebten Zeile des Ringspeichers 23 demselben Objekt wie zuvor zugeordnet werden, nämlich dem Stück 3S mit der Stücknummer 1.

In Fig. 4h hat das Stück 3S den Erfassungsbereich der Kamera 5 verlassen und die achte Zeile des Ringspeichers 23 wird mit weißen Zellen beschrieben. Die Datenverarbeitungsanlage 13 erkennt, daß die geschwärzten Zellen der siebten Zeile keine geschwärzten benachbarten Zellen in der achten Zeile des Ringspeichers 23 haben und somit das Ende des Stücks 3S mit der Stücknummer 1 erreicht ist. Das Stück 3S mit der Stücknummer 1 befindet sich somit vollständig in dem Ringspeicher 23 und wird nun wie folgt ausgewertet:
Die Datenverarbeitungsanlage 13 bestimmt anhand der geschwärzten Zellen im Ringspeicher 23 für das Stück 3S (das Objekt mit der Stücknummer 1, s. Fig. 4) das Flächenmaß sowie den Projektionsflächenschwerpunkt 3PFS. Die Datenverarbeitungsanlage 13 bestimmt mit anderen Worten von einer Projektionsfläche 3PF des Stückes 3S den Projektionsflächenschwerpunkt 3PFS und das Maß.

Da die Kamera 5 in einem festen Abstand von der Abwurfkante 1AK des Förderbandes 1 angeordnet ist und der Datenverarbeitungsanlage 13 der tatsächliche Vorschub des Förderbandes 1 durch die Impulsgeber bekannt ist, liegen in der Datenverarbeitungsanlage 13 Daten über jedes Stück 3S vor, die den Abstand des Projektionsflächenschwerpunkts 3PFS von der Abwurfkante 1AK und das Projektionsflächenmaß des jeweiligen Stückes 3S angeben.

Den Stücken 3S des Stückguts wird in der Datenverarbeitungsanlage 13 folgend dadurch eine Masse zugeordnet, daß das Projektionsflächenmaß eines jeden Stückes 3S mit einer durchschnittlichen Flächenmasse multipliziert wird, die wie folgt bestimmt wird.

### Bestimmung der durchschnittlichen Flächenmasse

Eine vorbestimmte Masse des Stückguts 3 wird auf dem Förderband 1 verteilt, und durch den Erfassungsbereich 5E der Kamera 5 geleitet. In der Datenverarbeitungsanlage 13 wird das Projektionsflächenmaß für jedes Stück 3S des Stückguts 3 bestimmt, und die einzelnen Projektionsflächenmaße werden zu einem Gesamtprojektionsflächenmaß addiert.

Die durchschnittliche Flächenmasse ergibt sich aus dem Quotienten von der vorbestimmten Masse zu dem Gesamtprojektionsflächenmaß des Stückguts 3.

Die auf diese Weise bestimmte durchschnittliche Flächenmasse gibt somit an, wie viel Masse durchschnittlich mit einem bestimmten Projektionsflächenmaß verbunden ist. Dadurch, daß auf dem Förderband 1 eine große Anzahl von Stücken 3S angeordnet ist und deren Masse nicht erheblich voneinander abweicht, gleichen sich Fehler bei der Massenbestimmung einzelner Stücke 3S aus, wodurch die Masse von beispielsweise auf einem Meter Förderband 1 angeordneten Stücken 3S mit einem Fehler bestimmt werden kann, der kleiner als 10% ist.

Die auf diese Weise bestimmte durchschnittliche Flächenmasse ist für das jeweilige Gut und dessen Herstellungsverfahren charakteristisch. Daher muss die durchschnittliche Flächenmasse für jede Art von Stückgut 3 und jedes Herstellungsverfahren individuell bestimmt werden.

Beispielsweise können sich die durchschnittlichen Flächenmassen eines Stückguts 3 unterscheiden, wenn dieses zu verschiedenen Zeiten von einem Ausgangsprodukt hergestellt wurde. Handelt es sich bei dem Stückgut 3 beispielsweise um Gemüsestücke, die einmal von Gemüse vor der Reife und einmal von Gemüse nach der Reife hergestellt wurden, so können sich die durchschnittlichen Flächenmassen voneinander unterscheiden, da die Gemüsestücke einen unterschiedlichen Wassergehalt aufweisen.

Ferner kann die durchschnittliche Flächenmasse von der Art der Stücke 3S des Stückguts 3 abhängig sein. Werden Äpfel beispielsweise einmal in Viertel geteilt und einmal in Scheiben geschnitten, so wird sich die durchschnittlichen Flächenmasse derselben voneinander unterscheiden.

### Waage

Die unter Bezug auf Fig. 2 beschriebene Anordnung kann somit als Waage 17 dienen.

Zu diesem Zweck wird eine Menge des Stückguts 3, dessen Masse bestimmt werden soll, auf dem Förderband 1 verteilt. Die Stücke 3S des Stückguts 3 werden durch den Erfassungsbereich 5E der Kamera 5 geführt, und die Datenverarbeitungsanlage 13 bestimmt die Projektionsflächenmasse der einzelnen Stücke 3S des Stückguts 3 und addiert diese zu einem Gesamtprojektionsflächenmaß auf.

Sind sämtliche Stücke 3S des Stückguts 3 durch den Erfassungsbereich 5E der Kamera 5 geführt, und ist das Gesamtprojektionsflächenmaß der Stücke 3S des Stückguts 3 bestimmt, so wird dieses mit dem durchschnittlichen Flächenmaß multipliziert, um die Gesamtmasse des durchgeleiteten Stückguts 3 zu bestimmen.

### Dosier- und Abgabevorrichtung

Die unter Bezug auf Fig. 2 beschriebene Anordnung kann ferner als Dosier- und Abgabevorrichtung 19 für Stückgut 3 verwendet werden.

Zu diesem Zweck werden die Stücke 3S des Stückguts 3 auf dem Förderband 1 verteilt, und durch den Erfassungsbereich 5E der Kamera 5 geführt.

In der Datenverarbeitungsanlage 13 werden die einzelnen Stücke 3S indiziert und es wird für jedes Stück 3S sein Projektionsflächenmaß und sein Projektionsflächenschwerpunkt 3PFS bestimmt.

Folgend werden die Projektionsflächenmaße eines jeden Stückes 3S mit der durchschnittlichen Flächenmasse multipliziert, um die Masse eines jeden Stückes 3S des Stückguts 3 zu bestimmen. Auf diese Weise entsteht in der Datenverarbeitungsanlage 13 eine Zuordnung, die jedem Stück 3S auf der Fördereinrichtung 1 eine Stücknummer, seine Masse und seinen Projektionsflächenschwerpunkt 3PFS zuordnet.

Wie oben beschrieben, liegen in der Datenverarbeitungsanlage 13 ferner Daten vor, die für jedes Stück 3S den Abstand von der Abwurfkante 1AK des Förderbandes 1 angeben (Abstand Projektionsflächenschwerpunkt 3PFS von Abwurfkante 1AK) und diese Daten sind ebenfalls Teil der erstellten Zuordnung.

Diese Zuordnung kann nun verwendet werden, um verschiedene Abgabemodi der Dosier- und Abgabevorrichtung zu realisieren:

### Abgeben einer bestimmten Masse:

Verlangt ein Bediener der Dosier- und Abgabevorrichtung 19 folgend eine bestimmte Masse des Stückguts 3, so beginnt die Datenverarbeitungsanlage 13 ausgehend von der Abwurfkante 1AK entgegen der Förderrichtung FR damit, die Masse der einzelnen Stücke 3S des Stückguts 3 aufzusummieren, bis die gewünschte Masse erreicht ist. Die Datenverarbeitungsanlage 13 erhält auf diese Weise eine Förderlänge, die von dem Förderband 1 abgefördert werden muss, um die von dem Bediener verlangte Masse des Stückguts 3 abzugeben, wobei ein Stück 3S als abgefördert betrachtet wird, wenn sein Projektionsflächenschwerpunkt 3PFS über die Abwurfkante 1AK hinaus gefördert ist.

Folgend sendet die Datenverarbeitungsanlage 13 ein entsprechendes Signal an den Förderantrieb 1A, der daraufhin das Förderband 1 um die berechnete Förderlänge abfördert, wodurch der Bediener die angeforderte Masse des Stückguts 3 erhält. Bevorzugt vergleicht die Datenverarbeitungsanlage 13 dabei den Soll-Wert des Vorschubs mit dem Ist-Wert des Vorschubs, der von den Impulsgebern übermittelt wird, und führt gegebenenfalls eine Korrektur durch.

Die von dem Bediener angeforderte Masse kann größer oder kleiner als die Masse sein, die zwischen der Abwurfkante 1AK und der Lichtquelle 9 auf der Förderseite 1FS des Förderbands 1 angeordnet ist. Ist die von dem Bediener angeforderte Masse des Stückguts 3 kleiner als die in diesem Bereich aufliegende Masse, so kann die Datenverarbeitungsanlage 13 direkt die abzufördernde Förderlänge berechnen und abfördern. Ist die von dem Bediener angeforderte Masse größer als die in diesem Bereich aufliegende Masse des Stückguts 3, so berechnet die Datenverarbeitungsanlage 13 die Masse der durch den Erfassungsbereich 5E der Kamera 5 geführten Stücke 3S des Stückguts 3 und schiebt das Förderband 1 so lange vor, bis die angeforderte Masse von dem Förderband 1 abgefördert ist. Aufgrund der Einfachheit des Verfahrens kann das Förderband 1 selbst in letzterem Fall mit einer hohen Fördergeschwindigkeit betrieben werden.

### Abgeben einer bestimmten Stückzahl:

Verlangt ein Bediener der Dosier- und Abgabevorrichtung 19 alternativ eine bestimmte Anzahl von Stücken 3S des Stückguts 3, so beginnt die Datenverarbeitungsanlage 13 ausgehend von der Abwurfkante 1AK entgegen der Förderrichtung FR damit, die Anzahl der einzelnen Stücke 3S des Stückguts 3 aufzusummieren, bis die gewünschte Stückzahl erreicht ist. Die Datenverarbeitungsanlage 13 erhält auf diese Weise eine Förderlänge, die von dem Förderband 1 abgefördert werden muss, um die von dem Bediener verlangte Stückzahl des Stückguts 3 abzugeben, wobei ein Stück 3S wiederum als abgefördert betrachtet wird, wenn sein Projektionsflächenschwerpunkt 3PFS über die Abwurfkante 1AK hinaus gefördert ist.

Folgend sendet die Datenverarbeitungsanlage 13 ein entsprechendes Signal an den Förderantrieb 1A, der daraufhin das Förderband 1 um die berechnete Förderlänge abfördert, wodurch der Bediener die angeforderte Stückzahl von Stücken 3S des Stückguts 3 erhält. Bevorzugt vergleicht die Datenverarbeitungsanlage 13 dabei wiederum den Soll-Wert des Vorschubs mit dem Ist-Wert des Vorschubs, der von den Impulsgebern übermittelt wird, und führt gegebenenfalls eine Korrektur durch.

Die von dem Bediener angeforderte Stückzahl kann wiederum größer oder kleiner als die Stückzahl sein, die zwischen der Abwurfkante 1AK und der Lichtquelle 9 auf der Förderseite 1FS der Förderbands 1 angeordnet ist. Ist die von dem Bediener angeforderte Stückzahl des Stückguts 3 kleiner als die in diesem Bereich aufliegende Stückzahl, so kann die Datenverarbeitungsanlage 13 direkt die abzufördernde Förderlänge berechnen und abfördern. Ist die von dem Bediener angeforderte Stückzahl größer als die in diesem Bereich aufliegende Stückzahl des Stückguts 3, so berechnet die Datenverarbeitungsanlage 13 die Stückzahlen der durch den Erfassungsbereich 5E der Kamera 5 geführten Stücke 3S des Stückguts 3 und schiebt das Förderband 1 so lange vor, bis die angeforderte Stückzahl von dem Förderband 1 abgefördert ist. Aufgrund der Einfachheit des Verfahrens kann das Förderband 1 selbst in letzterem Fall mit einer hohen Fördergeschwindigkeit betrieben werden.

### Abgeben einer Mindeststückzahl und einer Mindestmasse von Stücken 3S:

Verlangt ein Bediener der Dosier- und Abgabevorrichtung 19 alternativ eine bestimmte Anzahl von Stücken 3S des Stückguts 3 und gleichzeitig eine bestimmte Masse der Stücke 3 S des Stückguts 3 (d.h. eine Mindeststückzahl und eine Mindestmasse der Stücke 3S, bspw. zehn Stücke 3S und eine Masse von mind. 100g), so beginnt die Datenverarbeitungsanlage 13 ausgehend von der Abwurfkante 1AK entgegen der Förderrichtung FR damit, die Anzahl der einzelnen Stücke 3S des Stückguts 3 aufzusummieren, bis die gewünschte Stückzahl erreicht ist. Dann wird überprüft, ob die gewünschte Stückzahl die gewünschte Masse erreicht. Ist die gewünschte Masse erreicht, wird die auf diese Weise bestimmte Förderlänge abgefördert. Ist die gewünschte Masse nicht erreicht, wird die Zahl der abzufördernden Stücke 3S solange erhöht, bis die gewünschte Masse erreicht ist. Die Datenverarbeitungsanlage 13 erhält auf diese Weise eine Förderlänge, die von dem Förderband 1 abgefördert werden muss, um die von dem Bediener verlangte Mindeststückzahl und Mindestmasse des Stückguts 3 abzugeben.

(Alternativ beginnt die Datenverarbeitungsanlage 13 ausgehend von der Abwurfkante 1AK entgegen der Förderrichtung FR damit, die Masse der einzelnen Stücke 3S des Stückguts 3 aufzusummieren, bis die gewünschte Masse erreicht ist. Dann wird überprüft, ob dabei auch die gewünschte Stückzahl erreicht ist. Ist die gewünschte Stückzahl erreicht, wird die auf diese Weise bestimmte Förderlänge abgefördert. Ist die gewünschte Stückzahl nicht erreicht, wird die Zahl der abzufördernden Stücke 3S solange erhöht, bis die gewünschte Stückzahl erreicht ist. Die Datenverarbeitungsanlage 13 erhält auf diese Weise eine Förderlänge, die von dem Förderband 1 abgefördert werden muss, um die von dem Bediener verlangte Mindeststückzahl und Mindestmasse des Stückguts 3 abzugeben.)

Folgend sendet die Datenverarbeitungsanlage 13 ein entsprechendes Signal an den Förderantrieb 1A, der daraufhin das Förderband 1 um die berechnete Förderlänge abfördert, wodurch der Bediener die angeforderte Mindeststückzahl und Mindestmasse von Stücken 3S des Stückguts 3 erhält. Bevorzugt vergleicht die Datenverarbeitungsanlage 13 dabei wiederum den Soll-Wert des Vorschubs mit dem Ist-Wert des Vorschubs, der von den Impulsgebern übermittelt wird, und führt gegebenenfalls eine Korrektur durch.

Wird die Abgabe- und Dosiervorrichtung 19 in der Nahrungsmittelindustrie bspw. zum Belegen von Pizzen verwendet, so kann auf diese Weise sichergestellt werden, daß auf jeder Pizza bspw. mindestens 10 Garnelen mit einer Mindestmasse von 100g aufliegen.

Alternativ zu dem Abfördern einer bestimmten Förderlänge des Förderbandes 1 kann die Abwurfkante 1AK des Förderbandes 1 eine entsprechende Länge zurückgezogen werden (Rückzugskante).

Vor oder hinter dem Erfassungsbereich 5E der Kamera 5 kann eine im Stand der Technik bekannte Aussortiervorrichtung angeordnet sein, um fehlerhaftes Stückgut 3 von dem Förderband 1 auszusortieren.

Die Genauigkeit des zuvor beschriebenen Verfahrens zur Bestimmung der Masse von Stückgut 3 ist durch die Auflösung der Kamera 5 beschränkt, da ein Stück 3S des Stückguts 3, das eine Größe aufweist, die kleiner als die Auflösung der Kamera ist, nicht erfasst wird.

Die Kamera 5 in dem Ausführungsbeispiel der Fig. 2 weist vorliegend 1024 Pixel auf und deckt damit eine Breite des Förderbandes 1 von 250 mm ab, so daß ein Pixel ungefähr 0,25 mm entspricht. Daher werden Stücke 3S mit einem Projektionsflächenmaß von kleiner als 0,06 mm² von der Kamera 5 und der Datenverarbeitungsanlage 13 nicht erfasst.

Die Datenverarbeitungsanlage 13 kann zusätzlich so programmiert sein, daß sie Stücke 3S mit einem Projektionsflächenmaß unterhalb einer vorbestimmten Grenze generell nicht berücksichtigt. Die Datenverarbeitungsanlage 13 kann beispielsweise so eingerichtet sein, daß sie Stücke 3S unberücksichtig lässt, die ein Projektionsflächenmaß von weniger als 1 mm² aufweisen. Wird eine derartige Dosier- und Abgabevorrichtung 19 beispielsweise in der Nahrungsmittelindustrie verwendet, um eine vorbestimmte Masse gefrorenen Hackfleisches auf eine Fertigpizza zu geben, so erhält der Käufer der Fertigpizza die vorbestimmte Masse des Hackfleisches und zusätzlich die Stücke des Hackfleisches, die eine Fläche kleiner als 1 mm² aufweisen.

Wird die Anordnung der Fig. 2 als Waage verwendet, so ist die Fördergeschwindigkeit des Förderbandes 1 bevorzugt konstant. Wird die Anordnung der Fig. 2 als Dosier- und Abgabevorrichtung 19 verwendet, so wird in einer Variante das Förderband 1 zu Beginn des Abgebens des Stückguts 3 beschleunigt und gegen Ende des Abgebens abgebremst. Das Förderband 1 sollte in jedem Fall so beschleunigt werden, daß die Stücke 3S des Stückguts 3 auf dem Förderband 1 nicht verrutschen, da dann die in der Datenverarbeitungsanlage 13 vorliegenden Projektionsflächenschwerpunkte 3PFS nicht mehr mit den tatsächlichen übereinstimmen. Das Förderband 1 kann daher Vertiefungen, beispielsweise Senkungen, aufweisen, um ein Verrutschen des Stückguts zu verhindern. Alternativ oder zusätzlich kann das Förderband 1 eine rutschfeste Oberfläche aufweisen.

Das Stückgut 3 wird bevorzugt in einem Wasserfallverfahren auf dem Förderband 1 verteilt. Dies kann beispielsweise dadurch erreicht werden, daß das Stückgut 3 in einem kontinuierlichen Materialstrom von einem Zuführband auf das Förderband 1 abgegeben wird, wobei das Verhältnis der Fördergeschwindigkeiten derart eingestellt ist, daß sich die einzelnen Stücke 3S des Stückguts 3 auf dem Förderband 1 zum überwiegenden Teil nicht überlappen.

Der von der Datenverarbeitungsanlage 13 erstellten Zuordnung ist zu jedem Stück 3S die Stücknummer, die Masse und die Position auf der Fördereinrichtung 1 zu entnehmen. Die Datenverarbeitungsanlage 13 kann bei der Auswertung eines Stückes 3S jedoch andere oder weitere Stückqualitäten eines jeden Stückes 3S bestimmen, bspw. den Umfang eines jeden Stückes 3S oder die Form eines jeden Stückes 3S (rund, eckig oder ringförmig). Durch Verwendung einer Farbkamera als Kamera 5 kann jedem Stück 3S ferner als eine weitere Stückqualität seine Farbe zugeordnet werden. Die Abgabe der Stücke 3S durch die Abgabe- und Dosiervorrichtung 19 kann entsprechend einer einzelnen Stückqualität erfolgen, wie oben unter Bezug auf die Abgabe entsprechend der Masse oder entsprechend der Stückzahl beschrieben, oder kann entsprechend einer beliebigen Kombination von Stückqualitäten erfolgen, bspw. entsprechend einer Mindestmasse und Mindeststückzahl (wie oben beschrieben) oder bspw. entsprechend einer Mindestmasse und Mindeststückzahl, wobei von mehrfarbigen Stücken bspw. nur die roten gezählt werden.

Die Erstellung der beschriebenen Zuordnung kann nicht nur mit Hilfe der unter Bezug auf die Figuren 2 und 3 beschriebenen Vorrichtung ausgeführt werden, sondern kann auch mit Hilfe der unter Bezug auf Fig. 1 beschriebenen Vorrichtung durchgeführt werden, da sich die Vorrichtungen lediglich in der Art der Bestimmung der Masse von Stücken 3S des Stückguts unterscheiden. Die Zuordnung kann allgemein von jeder Vorrichtung erstellt werden, die optisch die einzelnen Stücke 3S erfaßt und aufgrund der optischen Daten die Masse der Stücke 3S bestimmt.

Die beschriebenen Vorrichtungen können auf vielfältige Weise eingerichtet sein, die Verfahren auszuführen bzw. die Erstellung der Zuordnung vorzunehmen. In einer ersten Variante ist die Datenverarbeitungsanlage 13 ein herkömmlicher Computer, der mit einer entsprechenden Software ausgestattet ist, die die Zuordnung erstellt. Alternativ kann die Datenverarbeitungsanlage 13 schaltungstechnisch eingerichtet sein, die Zuordnung zu erstellen. In einer weiteren Variante kann ein herkömmlicher Computer auf die Erfassung und Auswertung von Bildern der Kamera(s) 5 beschränkt sein und eine externe Steuerung vorgesehen sein (mit der dieser Computer in Verbindung steht), um die Zuordnung zu erstellen und die einzelnen Komponenten, wie bspw. die Fördereinrichtung 1, zu steuern. Die Steuerung kann wiederum durch eine geeignete Software oder durch eine geeignete Schaltung realisiert sein.

### Bezugszeichenliste:

- 1: Fördereinrichtung (Förderband)
- 1A: Förderantrieb
- 1AK: Abwurfkante des Förderbandes 1
- 1FS: Förderseite des Förderbandes 1
- 1RS: Rücklaufseite des Förderbandes 1
- 3: Stückgut
- 3S: Stück des Stückguts
- 3PF: Projektionsfläche eines Stückes des Stückguts
- 3PFS: Projektionsflächenschwerpunkt eines Stückes des Stückguts
- 5: Kamera
- 5E: Erfassungsbereich der Kamera
- 5oA: optische Achse der Kamera
- 9: Lichtquelle
- 11: Zeilenbild
- 13: Datenverarbeitungsanlage
- 17: Waage
- 19: Dosier- und Abgabevorrichtung
- 21: Abstreifer
- 23: Ringspeicher
- FR: Förderrichtung

## Patentansprüche

1. Verfahren zur Bestimmung der Masse von einem auf einer Fördereinrichtung (1) befindlichen schütt- oder rieselfähigen Stückguts (3), das die Schritte umfaßt:
a) Verteilen einzelner Stücke (3S) des Stückguts (3) auf der Fördereinrichtung (1) derart, daß sich mindestens die Hälfte derselben nicht gegenseitig überlappen,
b) Fördern des Stückguts (3) auf der Fördereinrichtung (1) entlang einer Förderrichtung (FR) durch einen Erfassungsbereich (5E) mindestens einer Kamera (5),
c) Erzeugen von aneinander anschließenden oder teilweise überlappenden Bildern der Stücke (3S) in dem Erfassungsbereich (5E) mit Hilfe der Kamera (5),
d) Erzeugen von geometrischen Daten der Stücke (3S) auf der Grundlage der Bilder in Abhängigkeit von der Position der Stücke (3S) auf der Fördereinrichtung (1),
e) Berechnen der Masse der auf der Fördereinrichtung (1) angeordneten Stücke (3S) aufgrund der geometrischen Daten derselben in Abhängigkeit von der Position der Stücke (3S) auf der Fördereinrichtung (1), wobei für das Stückgut (3) vorab eine durchschnittliche Flächenmasse bestimmt wird,
f) Erstellen einer Zuordnung, die jedes Stück (3 S) des Stückguts (3) indiziert und ihm mindestens die Masse als eine Stückqualität und seine Position auf der Fördereinrichtung (1) zuordnet, **gekennzeichnet dadurch, daß**
als ein Teil der geometrischen Daten im Schritt e) ein Projektionsflächenmaß einer Proiektionsfläche (3PF) eines jeden Stückes (3S) des Stückguts (3) in einer festgelegten Projektionsrichtung bestimmt wird, das Projektionsflächenmaß der Stücke (3S) mit der durchschnittlichen Flächenmasse multipliziert wird und
daß die Vorschubgeschwindigkeit der Fördereinrichtung (1) zur Abförderung eines vorbestimmten Werts mindestens der Masse in Abhängigkeit von einer den Stücken des Stückguts zugeordneten Masse gesteuert wird.

2. Verfahren nach Anspruch 1, **dadurch gekennzeichnet, daß** als ein Teil der geometrischen Daten ein Projektionsflächenschwerpunkt (3PFS) von der Projektionsfläche (3PF) eines jeden Stückes (3S) des Stückguts (3) bestimmt wird und die Vorschubgeschwindigkeit der Fördereinrichtung (1) in Abhängigkeit von der zugeordneten Masse und Anzahl der Stücke (3S) des Stückguts (3) gesteuert wird, um eine vorbestimmte Mindestgesamtmasse und eine Mindestanzahl von Stücken (3S) des Stückguts (3) abzufördern.

3. Verfahren nach Anspruch 1 oder 2, **dadurch gekennzeichnet, daß** zur Bestimmung der durchschnittlichen Flächenmasse des Stückguts (3) eine vorbestimmte Masse des Stückguts (3) auf der Fördereinrichtung (1) verteilt und durch den Erfassungsbereich (5E) der Kamera (5) geleitet wird, und die Projektionsflächenmaße von Stücken (3S) dieses Stückguts (3) zu einem Gesamtprojektionsflächenmaß addiert werden, so daß sich die durchschnittliche Flächenmasse als Quotient der vorbestimmten Masse und des Gesamtprojektionsflächenmaßes des Stückguts (3) ergibt.

4. Verfahren nach einem der vorangehenden Ansprüche, **dadurch gekennzeichnet, daß** das Stückgut (3) auf die Fördereinrichtung (1) in einem kontinuierlichen Materialstrom aufgestreut wird, und eine Fördergeschwindigkeit der Fördereinrichtung (1) derart eingestellt wird, daß sich die einzelnen Stücke (3S) des Stückguts (3) nicht überlappen.

5. Verfahren nach einem der vorangehenden Ansprüche, **dadurch gekennzeichnet, daß** das Stückgut (3) im Schritt c) mit einer kontinuierlichen Geschwindigkeit durch den Erfassungsbereich (5E) der mindestens einen Kamera (5) geführt wird.

6. Verfahren nach einem der vorangehenden Ansprüche, **dadurch gekennzeichnet, daß** von der Kamera (5) Zeilenbilder erzeugt werden, die eine Breite der Fördereinrichtung (1) abdecken.

7. Verfahren nach einem der vorangehenden Ansprüche, **dadurch gekennzeichnet, daß** im Schritt e) die Bilder des Stückguts (3) auf der Fördereinrichtung (1) in einer Datenverarbeitungsanlage (13) anhand von gegenseitigen Überlappungsbereichen aneinander gefügt werden.

8. Verfahren nach einem der vorangehenden Ansprüche, **dadurch gekennzeichnet, daß** das Auslösen der Kamera (5) von einem Signal getriggert wird, das den Vorschub der Fördereinrichtung wiedergibt.

9. Verfahren nach einem der vorangehenden Ansprüche, **gekennzeichnet durch** das Aussortieren von fehlerhaften Stücken (3S) des Stückguts (3) mit Hilfe einer Aussortiereinrichtung, die in Förderrichtung (FR) vor oder nach der mindestens einen Kamera (5) angeordnet ist.

10. Verfahren nach einem der vorangehenden Ansprüche, **dadurch gekennzeichnet, daß** Stücke (3S) des Stückguts (3) mit einem Projektionsflächenmaß, das kleiner als eine vorgegebene Mindestgröße ist, im Schritt e) nicht berücksichtigt werden.

11. Verfahren nach einem der vorangehenden Ansprüche, **dadurch gekennzeichnet, daß** die Stücke (3S) im Schritt d) von oberhalb und/oder unterhalb der Fördereinrichtung (1), angeordneten Lichtquellen (9) beleuchtet werden.

12. Verfahren nach einem der vorangehenden Ansprüche, **dadurch gekennzeichnet, daß** die mindestens eine Kamera (5) im Schritt d) Bilder von den auf der Fördereinrichtung (1) angeordneten Stücken (3S) erzeugt, die die senkrechte Projektionsfläche des Stückguts (3) auf die Fördereinrichtung (1) zeigen.

13. Verfahren nach einem der vorangehenden Ansprüche, **dadurch gekennzeichnet, daß** für jedes Stück (3S) des Stückguts (3) mindestens eine weitere Stückqualität, bspw. die Form, der Umfang oder die Farbe, bestimmt wird.

14. Vorrichtung (19) zur dosierten Abgabe eines schütt- oder rieselfähigen Stückguts (3), mit einer Fördereinrichtung (1), auf der das Stückgut (3) verteilt angeordnet ist, mindestens einer Kamera (5), die auf die Fördereinrichtung (1) gerichtet ist und Bilder des auf der Fördereinrichtung (1) angeordneten Stückguts (3) erzeugt, sowie einer Datenverarbeitungsanlage (13), die die von der Kamera (5) erzeugten Bilder erhält und auswertet, um geeignet Stückgut (3) von der Fördereinrichtung (1) abzufördern, **dadurch gekennzeichnet, daß** die Vorrichtung (19) eingerichtet ist, jedes Stück (3S) des Stückguts (3) durch ein Verfahren gemäß einem der Ansprüche 1 bis 13 zu indizieren und ihm mindestens die Masse als eine Stückqualität und seine Position auf der Fördereinrichtung (1) zuzuordnen sowie die Stücke (3 S) entsprechend der mindestens einen Stückqualität und entsprechend einer vorbestimmten (Mindest-)Stückzahl von der Fördereinrichtung (1) abzugeben.

15. Vorrichtung nach Anspruch 14, **dadurch gekennzeichnet, daß** die Fördereinrichtung (1) ein Förderband oder eine Rüttelrinne ist.

16. Vorrichtung nach Anspruch 15, **dadurch gekennzeichnet, daß** das Förderband oder die Rüttelrinne durch ein zumindest teilweise für die von einer Lichtquelle (9) erzeugte Strahlung transparentes Material gebildet ist, und die Lichtquelle (9) unterhalb des Förderbands oder der Rüttelrinne angeordnet ist, um die Stücke (3S) des Stückguts (3) von unten zu beleuchten.

17. Vorrichtung nach einem der Ansprüche 14 bis 16, **dadurch gekennzeichnet, daß** eine optische Achse (5oA) der mindestens einen Kamera (5) senkrecht zur Förderrichtung (FR) ist.

18. Vorrichtung nach einem der Ansprüche 14 bis 17, **dadurch gekennzeichnet, daß** die Fördereinrichtung (1) einen Abstreifer (21) umfaßt, der in Förderrichtung (FR) nach einer Abwurfkante (1AK) der Fördereinrichtung (1) angeordnet ist.

19. Vorrichtung nach einem der Ansprüche 14 bis 18, **dadurch gekennzeichnet, daß** die Lichtquelle (9) eine IR-, UV- oder farbige Lichtquelle ist.

20. Softwareprodukt umfassend Programmcodeinformationen zur Ausführung des Verfahrens nach einem der Ansprüche 1 bis 13.

21. Speichermedium mit darauf gespeicherten Softwareprodukt nach Anspruch 20.

## Claims

1. Method of determining the mass of pourable or tricklable piece goods (3) present on conveying equipment (1), which method comprises the steps of:
a) distributing individual items (3S) of the piece goods (3) on the conveying equipment (1) in such a way that at least a half thereof do not mutually overlap,
b) conveying the piece goods (3) on the conveying equipment (1) along a conveying direction (FR) through a detection region (5E) of at least one camera (5),
c) generating succeeding or partly overlapping images of the items (3S) in the detection region (5E) with the help of the camera (5),
d) generating geometric data of the items (3S) on the basis of the images in dependence on the position of the items (3S) on the conveying equipment (1),
e) calculating the mass of the items (3S) arranged on the conveying equipment (1) on the basis of the geometric data thereof in dependence on the position of the items (3S) on the conveying equipment (1), wherein an average area mass is determined in advance for the piece goods (3), and
f) establishing an association which indicates each item (3S) of the piece goods (3) and assigns thereto at least the mass as a quality of the item and the position thereof on the conveying equipment (1),
**characterised in that**
as part of the geometric data in step e) a projection area dimension of a projection area (3PF) of each item (3S) of the piece goods (3) in a fixed direction of projection is determined, the projection area dimension of the items (3S) is multiplied by the average area dimension and the speed of advance of the conveying equipment (1) for conveying away a predetermined value at least of the mass is controlled in dependence on a mass associated with the items of the piece goods.

2. Method according to claim 1, **characterised in that** as a part of the geometric data a projection area centre of area (3PFS) is determined from the projection area (3PF) of each item (3S) of the piece goods (3) and the speed of advance of the conveying equipment (1) is controlled in dependence on the associated mass and number of the items (3S) of the piece goods (3) so as to convey away a predetermined minimum total mass and minimum number of items (3S) of the piece goods (3).

3. Method according to claim 1 or 2, **characterised in that** for determination of the average area mass of the piece goods (3) a predetermined mass of the piece goods (3) is distributed on the conveying equipment (1) and conducted through the detection region (5E) of the camera (5) and the projection area dimensions of items (3S) of these piece goods (3) are summated to from a total projection area dimension so that the average area mass arises as a quotient of the predetermined mass and the total projection area dimension of the piece goods (3).

4. Method according to any one of the preceding claims, **characterised in that** the piece goods (3) are distributed on the conveying equipment (1) in a continuous material flow and a conveying speed of the conveying equipment (1) is set in such a manner that the individual items (3S) of the piece goods (3) do not overlap.

5. Method according to any one of the preceding claims, **characterised in that** the piece goods (3) in step c) are guided at a continuous speed through the detection region (5E) of the at least one camera (5).

6. Method according to any one of the preceding claims, **characterised in that** line images covering a width of the conveying equipment (1) are generated by the camera (5).

7. Method according to any one of the preceding claims, **characterised in that** in step e) the images of the piece goods (3) on the conveying equipment (1) are joined together in a data processing installation (13) on the basis of mutual regions of overlap.

8. Method according to any one of the preceding claims, **characterised in that** activation of the camera (5) is triggered by a signal reproducing the advance of the conveying equipment.

9. Method according to any one of the preceding claims, **characterised by** classification of faulty items (3S) of the piece goods (3) with the help of a classification device which is arranged in front of or behind the at least one camera (5) with respect to the conveying direction (FR).

10. Method according to any one of the preceding claims, **characterised in that** items (3S) of the piece goods (3) with a projection area dimension smaller than a predetermined minimum amount are not taken into consideration in step e).

11. Method according to any one of the preceding claims, **characterised in that** the items (3S) are illuminated in step d) by light sources (9) arranged above and/or below the conveying equipment (1).

12. Method according to any one of the preceding claims, **characterised in that** the at least one camera (5) in step d) generates images from the items (3S) which are arranged on the conveying equipment (1) and which show the perpendicular area of projection of the piece goods (3) on the conveying equipment (1).

13. Method according to any one of the preceding claims, **characterised in that** at least one further quality of the item, for example the shape, circumference or colour, is determined for each item (3S) of the piece goods (3).

14. Device (19) for metered delivery of pourable or tricklable piece goods (3), with conveying equipment (1) on which the piece goods (3) are arranged in distribution, at least one camera (5) which is directed towards the conveying equipment (1) and generates images of the piece goods (3) arranged on the conveying equipment (1), and a data processing installation (13) which receives and evaluates images generated by the camera (5) so as to convey away suitable piece goods (3) by the conveying equipment (1), **characterised in that** the device (19) is arranged to indicate each item (3S) of the piece goods (3) by a method according to any one of claims 1 to 13 and to assign thereto at least the mass as a quality of the item and the position thereof on the conveying equipment (1) as well as to deliver the items (3S) by the conveying equipment (1) in correspondence with the at least one quality of the item and in correspondence with a predetermined (minimum) piece number.

15. Device according to claim 14, **characterised in that** the conveying equipment (1) is a conveyor belt or a vibratory chute.

16. Device according to claim 15, **characterised in that** the conveyor belt or the vibratory channel is formed by a material at least partly transparent to the radiation produced by a light source (9) and the light source (9) is arranged below the conveyor belt or the vibratory channel so as to illuminate the items (3S) of the piece goods (3) from below.

17. Device according to any one of claims 14 to 16, **characterised in that** an optical axis (50A) of the at least one camera (5) is perpendicular to the conveying direction (FR).

18. Device according to any one of claims 14 to 17, **characterised in that** the conveying equipment (1) comprises a stripper (21) which is arranged after a discharge edge (1AK) of the conveying equipment (1) in the conveying direction (FR).

19. Device according to any one of claims 14 to 18, **characterised in that** the light source (9) is an IR, a UV or a coloured light source.

20. Software product comprising program code data for execution of the method according to any one of claims 1 to 13.

21. Storage medium with software product according to claim 20 stored thereon.

## Revendications

1. Procédé de détermination de la masse d'une matière en morceaux (3) apte au déversement ou à l'écoulement se trouvant sur un dispositif de transport (1), qui comprend les étapes suivantes :
a) répartition de morceaux individuels (3S) de la matière en morceaux (3) sur le dispositif de transport (1) de façon qu'au moins la moitié de ceux-ci ne se recouvrent pas mutuellement,
b) transport de la matière en morceaux (3) sur le dispositif de transport (1) suivant une direction de transport (FR) à travers une zone de détection (5E) d'au moins une caméra (5),
c) génération d'images se raccordant les unes aux autres ou se recouvrant partiellement des morceaux (3S) dans la zone de détection (5E) à l'aide de la caméra (5),
d) génération de données géométriques des morceaux (3S) sur la base des images en fonction de la position des morceaux (3S) sur le dispositif de transport (1),
e) calcul de la masse des morceaux (3S) disposés sur le dispositif de transport (1) sur la base de leurs données géométriques en fonction de la position des morceaux (3S) sur le dispositif de transport (1), une masse surfacique moyenne étant déterminée préalablement pour la matière en morceaux (3),
f) création d'une association qui indexe chaque morceau (3S) de la matière en morceaux (3) et lui associe au moins la masse en tant que qualité de morceau et sa position sur le dispositif de transport (1), **caractérisé en ce**
**qu'**une mesure de surface de projection d'une surface de projection (3PF) de chaque morceau (3S) de la matière en morceaux (3) dans une direction de projection définie est déterminée en tant que partie des données géométriques à l'étape e), que la mesure de surface de projection des morceaux (3S) est multipliée par la masse surfacique moyenne et
**que** la vitesse d'avance du dispositif de transport (1) pour transporter une valeur prédéterminée au moins de la masse est commandée en fonction d'une masse associée aux morceaux de la matière en morceaux.

2. Procédé selon la revendication 1, **caractérisé en ce qu'**un centre de gravité de surface de projection (3PFS) de la surface de projection (3PF) de chaque morceau (3S) de la matière en morceaux (3) est déterminé en tant que partie des données géométriques et la vitesse d'avance du dispositif de transport (1) est commandée en fonction de la masse associée et du nombre de morceaux (3S) de la matière en morceaux (3) pour transporter une masse totale minimum prédéterminée et un nombre minimum de morceaux (3S) de la matière en morceaux (3).

3. Procédé selon la revendication 1 ou 2, **caractérisé en ce que** pour déterminer la masse surfacique moyenne de la matière en morceaux (3), une masse prédéterminée de la matière en morceaux (3) est répartie sur le dispositif de transport (1) et conduite à travers la zone de détection (5E) de la caméra (5), et les mesures de surface de projection de morceaux (3S) de cette matière en morceaux (3) sont additionnées en une mesure de surface de projection totale, de sorte que la masse surfacique moyenne s'obtient à partir du quotient de la masse prédéterminée et de la mesure de surface de projection totale de la matière en morceaux (3).

4. Procédé selon l'une des revendications précédentes, **caractérisé en ce que** la matière en morceaux (3) est répandue sur le dispositif de transport (1) en un flux de matière continu, et une vitesse de transport du dispositif de transport (1) est réglée de façon que les différents morceaux (3S) de la matière en morceaux (3) ne se recouvrent pas.

5. Procédé selon l'une des revendications précédentes, **caractérisé en ce qu'**à l'étape c), la matière en morceaux (3) est conduite avec une vitesse continue à travers la zone de détection (5E) de ladite au moins une caméra (5).

6. Procédé selon l'une des revendications précédentes, **caractérisé en ce que** la caméra (5) génère des images lignes qui couvrent une largeur du dispositif de transport (1).

7. Procédé selon l'une des revendications précédentes, **caractérisé en ce qu'**à l'étape e), les images de la matière en morceaux (3) sur le dispositif de transport (1) sont assemblées dans une installation de traitement de données (13) à l'aide des zones de recouvrement mutuel.

8. Procédé selon l'une des revendications précédentes, **caractérisé en ce que** la caméra (5) est déclenchée par un signal qui reproduit l'avance du dispositif de transport.

9. Procédé selon l'une des revendications précédentes, **caractérisé par** l'élimination des morceaux (3S) défectueux de la matière en morceaux (3) à l'aide d'un dispositif de triage qui est disposé avant ou après ladite au moins une caméra (5) dans la direction de transport (FR).

10. Procédé selon l'une des revendications précédentes, **caractérisé en ce que** les morceaux (3S) de la matière en morceaux (3) qui ont une mesure de surface de projection inférieure à une valeur minimale prédéfinie ne sont pas pris en compte à l'étape e).

11. Procédé selon l'une des revendications précédentes, **caractérisé en ce qu'**à l'étape d), les morceaux (3S) sont éclairés par des sources de lumière (9) disposées au-dessus et/ou au-dessous du dispositif de transport (1).

12. Procédé selon l'une des revendications précédentes, **caractérisé en ce qu'**à l'étape d), ladite au moins une caméra (5) génère des images des morceaux (3S) disposés sur le dispositif de transport (1) qui montrent la surface de projection verticale de la matière en morceaux (3) sur le dispositif de transport (1).

13. Procédé selon l'une des revendications précédentes, **caractérisé en ce qu'**au moins une autre qualité de morceau, par exemple la forme, le périmètre ou la couleur, est déterminée pour chaque morceau (3S) de la matière en morceaux (3).

14. Dispositif (19) pour la distribution dosée d'une matière en morceaux (3) apte au déversement ou à l'écoulement, avec un dispositif de transport (1) sur lequel la matière en morceaux (3) est répartie, au moins une caméra (5) qui est dirigée vers le dispositif de transport (1) et qui génère des images de la matière en morceaux (3) disposée sur le dispositif de transport (1), ainsi qu'un système de traitement de données (13) qui reçoit et évalue les images générées par la caméra (5) pour assurer le transport approprié de la matière en morceaux (3) par le dispositif de transport (1), **caractérisé en ce que** le dispositif (19) est conçu pour indexer chaque morceau (3 S) de la matière en morceaux (3) par un procédé selon l'une des revendications 1 à 13 et lui associer au moins la masse en tant que qualité de morceau et sa position sur le dispositif de transport (1) ainsi que pour assurer la distribution des morceaux (3S) par le dispositif de transport (1) en fonction de ladite au moins une qualité de morceau et en fonction d'un nombre (minimum) prédéterminé de morceaux.

15. Dispositif selon la revendication 14, **caractérisé en ce que** le dispositif de transport (1) est une bande transporteuse ou une goulotte vibrante.

16. Dispositif selon la revendication 15, **caractérisé en ce que** la bande transporteuse ou la goulotte vibrante est formée par un matériau au moins partiellement transparent au rayonnement généré par une source de lumière (9), et la source de lumière (9) est disposée au-dessous de la bande transporteuse ou de la goulotte vibrante pour éclairer par le bas les morceaux (3S) de la matière en morceaux (3).

17. Dispositif selon l'une des revendications 14 à 16, **caractérisé en ce qu'**un axe optique (5oA) de ladite au moins une caméra (5) est perpendiculaire à la direction de transport (FR).

18. Dispositif selon l'une des revendications 14 à 17, **caractérisé en ce que** le dispositif de transport (1) comprend un racloir (21) qui est disposé après un bord de déversement (1AK) du dispositif de transport (1) dans la direction de transport (FR).

19. Dispositif selon l'une des revendications 14 à 18, **caractérisé en ce que** la source de lumière (9) est une source de lumière IR, UV ou de couleur.

20. Produit logiciel comprenant des informations de code de programme pour exécuter le procédé selon l'une des revendications 1 à 13.

21. Support de stockage sur lequel le produit logiciel selon la revendication 20 est stocké.
